(19)

Europäisches
Patentamt
European
Patent Office
Office européen
des brevets

(11) **EP 2 135 144 B1**

(12) **EUROPEAN PATENT SPECIFICATION**

(45) Date of publication and mention
of the grant of the patent:
**26.08.2020   Bulletin 2020/35**

(51) Int Cl.:
***G05B 23/02*** *(2006.01)*

(21) Application number: **08742146.7**

(22) Date of filing: **20.03.2008**

(86) International application number:
**PCT/US2008/003642**

(87) International publication number:
**WO 2008/127535 (23.10.2008 Gazette 2008/43)**

(54) **MACHINE CONDITION MONITORING USING PATTERN RULES**

MASCHINENZUSTANDSÜBERWACHUNG MITHILFE VON MUSTERREGELN

SURVEILLANCE DE L'ÉTAT D'UNE MACHINE À L'AIDE DE RÈGLES À MOTIFS

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **13.04.2007   US 911577 P
18.03.2008   US 77279**

(43) Date of publication of application:
**23.12.2009   Bulletin 2009/52**

(73) Proprietor: **Siemens Aktiengesellschaft
80333 München (DE)**

(72) Inventors:
• **HACKSTEIN, Holger
63218 Dietzenbach (DE)**
• **NEUBAUER, Claus
Monmouth Junction, New Jersey 08852 (US)**
• **YUAN, Chao
Secaucus, New Jersey 07094 (US)**

(74) Representative: **Haseltine Lake Kempner LLP
Redcliff Quay
120 Redcliff Street
Bristol BS1 6HU (GB)**

(56) References cited:
**US-A- 4 435 770        US-A- 5 210 704
US-A- 6 076 405        US-A1- 2002 103 626
US-A1- 2004 158 435    US-B1- 6 484 109**

**Description**

BACKGROUND OF THE INVENTION

The present invention relates generally to machine condition monitoring and more particularly to determining pattern rules for use in machine condition monitoring.

Machine condition monitoring (MCM) is the process of monitoring one or more parameters of machinery, such that a significant change in the machine parameter(s) is indicative of a current or developing condition (e.g., failure, fault, etc.). Such machinery includes rotating and stationary machines, such as turbines, boilers, heat exchangers, etc. Machine parameters of monitored machines may be vibrations, temperatures, friction, electrical usage, power consumption, sound, etc., which may be monitored by appropriate sensors. The output of the sensors may be in the form of and/or be aggregated into a sensor signal or a similar signal.

Generally, a condition is a comparison of the machine parameter to a threshold. For example, a machine parameter value may be compared with an equality and/or inequality operator, such as $<$, $=$, $>$, $<>$, $\neq$, $\equiv$, $\leq$, $\geq$, etc., to a threshold value. Therefore, a condition signal is a signal based on the machine parameter values (e.g., a plurality of machine parameter values grouped as a discrete or continuous signal) and a condition signal pattern is a portion (e.g., sub-set) of the condition signal.

Machine condition monitoring systems generally use a number of rules, referred to as a rule base, to define the machine parameters to be monitored and critical information (e.g., indicative of a condition change) about those machine parameters. In some cases, hundreds of sensors monitor and/or record these machine parameters. The output of the sensors (e.g., sensor signal, sensor estimate, sensor residue, etc.) may then be used as the input to one or more rules. Rules must be correctly and intelligently designed to properly detect faults, but minimize improper indicators of faults (e.g., false alarms).

In general, simple rules are constructed as indicative conditional logical operations (e.g., if-then statements). The input of a rule, the "if", is a condition as described above (e.g., if machine parameter A>threshold B) and the output of the rule, the "then", is a fault (e.g., then fault type 1). Conditions may be composite by concatenating multiple conditions (e.g., with AND, OR, etc.) to create one input. Rule bases may be improved using a persistence measure, which is a duration of the condition. Persistence measure-based rules use information in a time range in contrast to the single time of simple rules and/or individual times of concatenated simple rules. Persistence measure-based rules may provide greater utility than simple rules and/or concatenated simple rules, but are limited in that they check the same condition at each time within the time range.

Many prior rule bases rely on human experts to manually create and maintain large amounts of rules. Manual rule creation is a time consuming process that requires human estimation of complex signal patterns. Further, some signal patterns indicative of faults are highly complex and cannot be captured with the rules described above. Accurately describing complex symptoms of faults is extremely complicated and, in many cases, intractable for a human using conventional methods of creating rules.

Therefore, alternative methods and apparatus are required to create rules in machine condition monitoring.

US 2002/103626 discloses methods for condition-based monitoring of a system and its components using joint time-frequency analysis and signal demodulation.

US 6,076,405 discloses an acoustic rotor monitor that is an autonomous self-powered measurement instrument which can detect embedded and hidden fatigue cracks in remotely inaccessible devices such as helicopter rotor system components.

US 6,484,109 discloses a diagnostic vibration data collector and analyzer which incorporates an expert system within a portable computer such as a laptop or notebook type computer.

BRIEF SUMMARY OF THE INVENTION

Aspects of the invention are set out in the appended claims to which reference should be made.

BRIEF DESCRIPTION OF THE DRAWINGS

FIG. 1 depicts a machine condition monitoring system according to an embodiment of the present invention;
FIG. 2 depicts a graph of a signal;
FIG. 3 depicts a graph of a signal;
FIG. 4 depicts a graph of a nonparametric signal;
FIG. 5 is a flowchart of a method of machine condition monitoring according to an embodiment of the present invention; and
FIG. 6 is a schematic drawing of a computer.

DETAILED DESCRIPTION

The present invention generally provides methods and apparatus for machine condition monitoring using pattern rules.

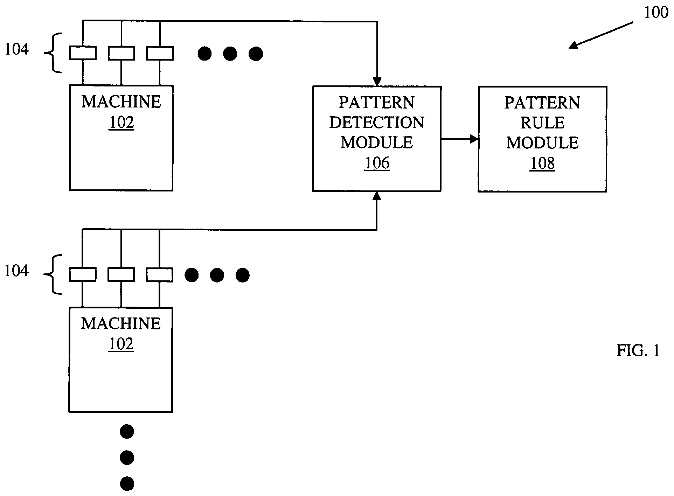

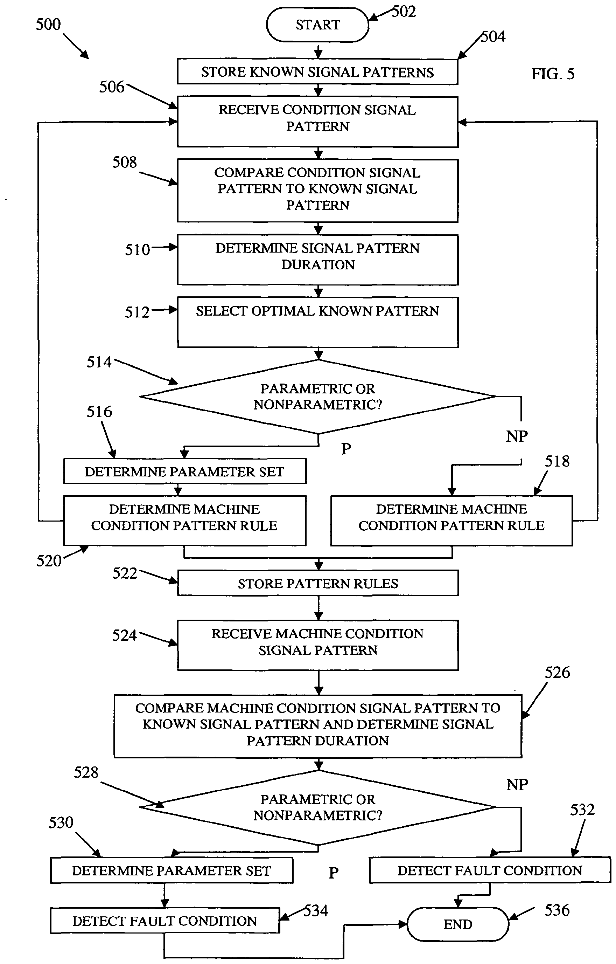

FIG. 1 depicts a machine condition monitoring system 100 according to an embodiment of the present invention. Machine condition monitoring (MCM) system 100 may be used in both the creation of pattern rules, as described below with respect to method 500 of FIG. 5, and general machine condition monitoring. MCM system 100 monitors one or more machines 102, each having one or more sensors 104. The output of sensors 104 is received at pattern detection module 106, which matches known signal patterns to patterns in the output of sensors 104. Pattern rule module 108 receives the matched patterns from pattern detection module 106 and creates pattern rules and/or detects machine faults.

Machines 102 may be any devices or systems that have one or more monitorable machine parameters, which may be monitored by sensors 104. Exemplary machines 102 include rotating and stationary machines, such as turbines, boilers, heat exchangers, etc.

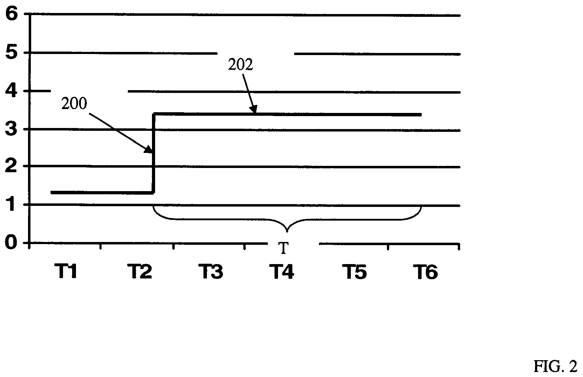

Sensors 104 are any devices which measure quantities and convert the quantities into signals which can be read by an observer and/or by an instrument as is known. Sensors 104 may measure machine parameters of machines 102 such as vibrations, temperatures, friction, electrical usage, power consumption, sound, etc. The output of sensors 104 may be in the form of and/or aggregated into a condition signal as depicted in FIGS. 2-4.

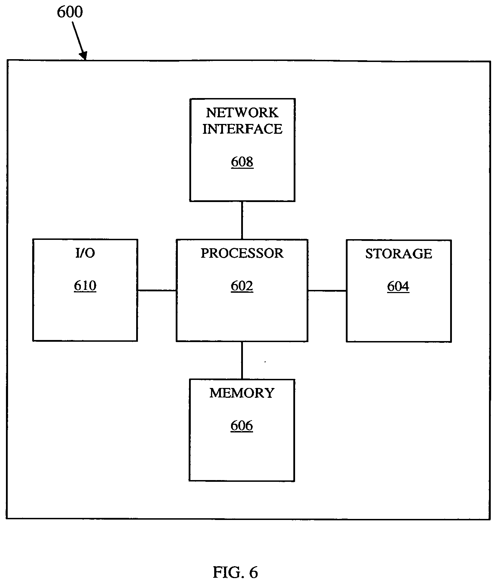

In some embodiments, pattern detection module 106 and/or pattern rule module 108 may be implemented on and/or in conjunction with one or more computers, such as computer 600 described below with respect to FIG. 6.

FIGS. 2-4 depict signals (e.g. condition signals, machine condition signals, etc.) for use in machine condition monitoring. These signals may be representative of machine parameter values acquired by one or more sensors 104. Portions of condition signals are identified as signal patterns as described below. These portions, or signal patterns, may be indicative of a machine fault and/or failure or other notable condition event. That is, a specific signal pattern may correspond to a specific fault.

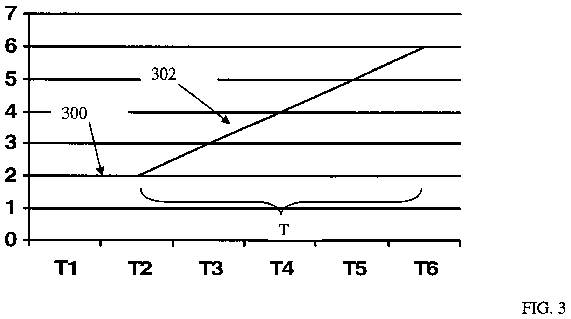

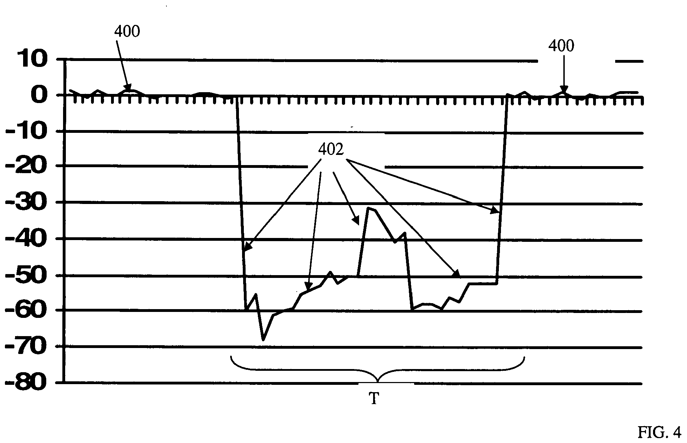

All signal patterns have a parameter T, which is the duration of the pattern. Signal patterns are categorized as parametric signal patterns or nonparametric signal patterns. Parametric signal patterns have a predefined shape that can be described by a set of parameters. Exemplary parametric signal patterns are shown in FIGS. 2 and 3. Nonparametric signal patterns do not have a parametric form. That is, nonparametric signal patterns cannot be readily identified by a set of parameters. An exemplary nonparametric signal pattern is shown in FIG. 4.

FIG. 2 depicts a graph of a signal 200. Signal 200 comprises one or more signal patterns 202. Signal pattern 202 has a duration T and is a parametric step pattern with a parameter c that indicates the constant value reached in the pattern. In exemplary signal pattern 202, c=3.5. Signal 200 and signal pattern 202 are indicative of a common threshold-type fault condition. That is, a sensor detects a value change and a level that exceeds a threshold. Here, the value detected by a sensor (e.g., sensor 104) "jumps" from a first value (e.g., -1.5) to a second value (e.g., -3.5) that exceeds a predetermined threshold (e.g., 3).

FIG. 3 depicts a graph of a signal 300. Signal 300 comprises one or more signal patterns 302. Signal pattern 302 has a duration T and is a parametric drift (e.g., slope) pattern with a parameter m that indicates the slope of the pattern. In exemplary signal pattern 302, m=1. Any individual point in signal pattern 302 may be found using the slope formula y=mx+b. Signal 300 and signal pattern 302 are indicative of another common threshold-type fault condition. That is, a sensor (e.g., sensor 104) detects values that "climb" at a measurable rate (e.g., slope, drift, etc.). Here, the sensor detects steadily increasing values from $T_2$ to $T_6$. The threshold may be during the drift (e.g., value 4 at $T_4$) indicating that the fault condition has been reached or may be after the signal pattern T, indicating that the fault condition has not been reached, but will be reached at a calculable time $T_{fault}$ in the future.

Though not depicted, any appropriate parametric patterns may be used. Such parametric patterns include higher-order polynomial patterns (e.g., $y=mx^2+dx+b$, etc.), exponential patterns, cosine patterns, etc. Generally, in signal patterns 202 and 302 as well as signal patterns with other parameters, the parameter sets may be referred to as signal parameters S.

FIG. 4 depicts a graph of an exemplary nonparametric signal 400. Nonparametric signal 400 comprises one or more signal patterns 402. Signal pattern 402 has a duration T and is a nonparametric signal pattern. The nonparametric signal pattern 402 may be stored or otherwise saved as described below with respect to method 500 of FIG. 5.

FIG. 5 is a flowchart of a method 500 of machine condition monitoring. In at least one embodiment, method steps of method 500 may be used to detect fault conditions. Machine condition monitoring system 100, specifically pattern detection module 106 and pattern rule module 108, may be used to detect faults in machines 102. The method begins at step 502.

In step 504, known signal patterns are stored at pattern detection module 106. Known signal patterns include parametric signal patterns, such as signal pattern 202 and signal pattern 302, as well as nonparametric signal patterns, such as nonparametric signal pattern 402. Any appropriate parametric signal patterns may be stored. Nonparametric signal patterns indicative of fault or other significant conditions may also be stored at pattern detection module 106. In some embodiments, such nonparametric signal patterns are automatically detected and stored. In alternative embodiments, nonparametric signal patterns are identified by a user and entered into (e.g., selected by or otherwise denoted) pattern detection module 106.

Parametric signal patterns may be stored by storing their relevant signal parameters S. Nonparametric signal patterns may be stored using time and/or frequency templates. Such signal patterns may be represented by $Z_T = [z_1, z_2, ..., z_T]$, where $z_i$ is the signal value at the i-th data point ant T is the signal pattern duration as described above with respect to FIGS. 2-4. Time templates of nonparametric signal patterns store all data point values (e.g., outputs of sensors 104) in the nonparametric signal pattern. A transform (e.g., general wavelet transform, Fourier transform, etc.) may be applied to nonparametric signal pattern $Z_T$ to obtain its representation in the frequency domain.

In step 506, a condition signal pattern is received. Herein, a condition signal pattern is a signal pattern for which a pattern rule is to be determined. In at least one embodiment, the condition signal pattern is received at the pattern detection module 106. In the same or alternative embodiments, the condition signal pattern is a signal pattern received from sensors 104 that is indicative of a fault condition. Accordingly, the condition signal pattern may be a parametric or nonparametric signal pattern. In some embodiments, a user may designate the received condition signal pattern as a known fault and may submit the condition signal pattern to pattern detection module 106. The condition signal pattern may be represented by $X_T = [x_{t-T+1}, x_{t-T+2}, ..., x_t]$ where $x_t$ is the value of the signal (e.g., signal 200, 300, 400, etc.) at a time t.

In step 508, the condition signal pattern is compared to known signal patterns stored in step 504. The condition signal pattern may be compared to one or more parametric signal patterns and nonparametric signal patterns. Additionally, the duration T of the condition signal pattern and/or the known signal pattern may be stretched and/or compressed to match each other to facilitate the comparison.

Any appropriate comparison measure may be used and a matching score G may be determined. An individual matching score G may be determined for each comparison of the condition signal pattern to a known signal pattern. Matching scores G are the best values obtained using all available comparison measures. That is, the comparison measures are optimized to present the best possible fit of the condition signal pattern to the known signal patterns. In some embodiments, a user may select a comparison measure. For example, an average Euclidean distance of the condition signal pattern to the known signal pattern may be used. Such a distance may be calculated as

$$D(X_T, Z_T) = \sqrt{\frac{1}{T} \sum_{i=1}^{T} |x_{t-T+i} - z_i|^2}$$ . Alternatively,

an average correlation measure may be used as

$$Corre(X_T, Z_T) = \frac{1}{T} \sum_{i=1}^{T} x_{t-T+i} \times z_i$$ . The matching score G is thus an indication of a correlation, or match, based on the comparison measure. In embodiments where an average Euclidean distance or other similar distance measure is employed, the optimal match is the minimum matching score G. In embodiments where an average correlation measure or other similar measure is employed, the optimal match is the maximum matching score G.

In step 510, a signal pattern duration is determined. The comparison measures of step 508 are normalized by T such that they are insensitive to the variable durations of T, as discussed above. At each time, $X_T$ is compared with $Z_T$ using an appropriate comparison measure (e.g., a Euclidean distance, a correlation, etc.). The duration T of the known signal pattern may be varied to coincide with the optimal (e.g., maximum or minimum, as appropriate) comparison measure. That is, the duration T is varied to allow the comparison of the condition signal pattern to each known signal pattern to achieve the most optimal correlation. By keeping the duration T of the incoming condition signal pattern intact while varying only the known signal pattern duration T, a fast Fourier transform or another appropriate transform may be employed to scan the whole incoming condition signal pattern in a very short time. For nonparametric signal patterns when the duration T is not the same as the original T, downsampling (e.g., reducing the sampling rate of the signal), interpolation, and/or other appropriate methods may be used to "find" signal values at non-existing data points.

In step 512, the optimal known signal pattern is selected. Based on the matching score determined in step 508 and the signal pattern duration determined in step 510, the condition signal pattern is compared to each of a plurality of known signal patterns and the known signal pattern that most closely matches (as evidenced by matching score G and/or signal pattern duration T) may be selected.

In step 514, a determination is made as to whether the known signal pattern is a parametric (P) or nonparametric (NP) signal pattern. If the known signal pattern is a parametric signal pattern, the method passes to step 516 and an optimal parameter set S is determined. In some embodiments, a standard least square method may be used to find an optimal matching score G. In alternative embodiments, a gradient-based optimization method may be used to search for an optimal matching score G. Of course, any appropriate method of finding an optimal matching score G may be used. The parameter set S corresponding to the solution with the optimal matching score S may be considered as the optimal parameter set S.

If the known signal pattern is a nonparametric signal, the method passes to step 518 and a machine condition pattern rule is determined by pattern rule module 108. The machine condition pattern rule is determined, in step 518, using the signal pattern duration T and the matching score G. The machine condition pattern rule is thus a multipartite threshold rule with a first threshold based on the determined matching score and the second threshold based on the determined signal pattern duration. The pattern rule is defined as a multi-input conditional logical rule with a duration threshold as one input and a matching score threshold as another input. For example, using a Euclidean distance measure as described above, a pattern rule may be defined as "If signal duration T > threshold A AND matching score G < threshold B, then fault type 1 occurs."

After the optimal parameter set S is determined in step 516, a machine condition pattern rule is determined in step 520 by pattern rule module 108. The machine condition pattern rule is determined, in step 520, using the signal pattern duration T, the matching score G, and the parameter set S. The machine condition pattern rule is thus a multipartite threshold rule with a first threshold based on the determined matching score, a second threshold based on the determined signal pattern duration, and a third threshold based on the one or more parameters of parameter set S. The pattern rule is defined as a multi-input conditional logical rule with a duration threshold as one input, a matching score threshold as another input, and a parameter set as still another input. For example, using a correlation measure as described above, a pattern rule may be defined as "If signal duration T > threshold A AND matching score G < threshold B AND slope > m, then fault type 2 occurs."

Method steps 506-520 may be repeated as appropriate to determine multiple pattern rules. That is, following determination of pattern rules in steps 518 and/or 520, the method 500 may return control to step 506. These pattern rules may be stored after steps 518 and/or 520 in a rule base (not shown) in step 522.

In step 524, a machine condition signal is received from sensors 104 at pattern detection module 106 or another pattern rules processing location. The machine condition signal may comprise a machine condition signal pattern as described above with respect to FIGS. 2-4 and may be indicative of machine parameters of machine 102. The machine condition signal pattern may be a parametric signal pattern or a nonparametric signal pattern.

In step 526, a duration of the machine condition signal pattern is determined and the received machine condition signal pattern is compared to at least one known signal pattern. Such a duration determination may be based on a user input and/or may be based at least in part on the signal values. That is, the duration may be determined based on the changes to the signal values that indicate machine condition changes. The received machine condition signal pattern is compared to at least one known signal pattern. Such a comparison may similar to the comparison of step 508 described above and may include a determination of a matching score G.

In step 528, a determination is made as to whether the received machine condition signal pattern is a parametric or nonparametric signal pattern. If the received machine condition signal pattern is a parametric signal pattern, the method passes to step 530 and a parameter set S of the received machine condition signal pattern is determined. If the received machine condition signal pattern is a nonparametric signal pattern, the method passes to step 532.

Based on the determination of the duration of the machine condition signal pattern and the matching score G, nonparametric rules in the rule base are used to detect a fault condition in step 532. Similarly, based on the determination of the duration of the machine condition signal pattern and the matching score G in step 526 and the parameter set S in step 530, parametric rules in the rule base are used to detect a fault condition in step 534. In steps 532 and 534, the signal pattern duration T, matching score, and, in the case or parametric signal patterns, the parameter set S, are input to the pattern rules stored in method step 522 to detect a fault condition. In this way, a fault condition is detected if the machine condition signal pattern satisfies one or more properties of the determined machine condition pattern rule.

The method ends at step 536.

FIG. 6 is a schematic drawing of a computer 600 according to an embodiment of the invention. Computer 600 may be used in conjunction with and/or may perform the functions of machine condition monitoring system 100 and/or the method steps of method 500.

Computer 600 contains a processor 602 that controls the overall operation of the computer 600 by executing computer program instructions, which define such operation. The computer program instructions may be stored in a storage device 604 (e.g., magnetic disk, database, etc.) and loaded into memory 606 when execution of the computer program instructions is desired. Thus, applications for performing the herein-described method steps, such as pattern rule creation, fault detection, and machine condition monitoring, in method 500 are defined by the computer program instructions stored in the memory 606 and/or storage 604 and controlled by the processor 602 executing the computer program instructions. The computer 600 may also include one or more network interfaces 608 for communicating with other devices via a network. The computer 600 also includes input/output devices 610 (e.g., display, keyboard, mouse, speakers, buttons, etc.) that enable user interaction with the computer 600. Computer 600 and/or processor 602 may include one or more central processing units, read only memory (ROM) devices and/or random access memory (RAM) devices. One skilled in the art will recognize that an implementation of an actual controller could contain other components as well, and that the controller of FIG. 6 is a high level representation of some of the components of such a controller for illustrative purposes.

According to some embodiments of the present invention, instructions of a program (e.g., controller software) may be read into memory 606, such as from a ROM device to a RAM device or from a LAN adapter to a RAM device. Execution of sequences of the instructions in the program may cause the computer 600 to perform one or more of the method steps described herein, such as those described above with respect to method 500. In alternative embodiments, hard-wired circuitry or integrated circuits may be used in place of, or in combination with, software instructions for implementation of the processes of the present invention. Thus, embodiments of the present invention are not limited to any specific combination of hardware, firmware, and/or software. The memory 606 may store the software for the computer 600, which may be adapted to execute the software program and thereby operate in accordance with the present invention and particularly in accordance with the methods described in detail above. However, it would be understood by one of ordinary skill in the art that the invention as described herein could be implemented in many different ways using a wide range of programming techniques as well as general purpose hardware sub-systems or dedicated controllers.

Such programs may be stored in a compressed, uncompiled, and/or encrypted format. The programs furthermore may include program elements that may be generally useful, such as an operating system, a database management system, and device drivers for allowing the controller to interface with computer peripheral devices, and other equipment/components. Appropriate general purpose program elements are known to those skilled in the art, and need not be described in detail herein.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope of the invention as defined by the appended claims.

**Claims**

1. A method of machine condition monitoring by a processor (602) of a machine condition monitoring system (100, 600), the method comprising:

   receiving (506) a condition signal pattern from sensors measuring parameters of a monitored machine (102), wherein the condition signal pattern is indicative of a fault condition;
   comparing (508) the condition signal pattern (102) to a plurality of known signal patterns that are indicative of fault conditions;
   creating a machine condition pattern rule for the monitored machine (102) based on the comparison of the condition signal pattern to each of the plurality of known signal patterns, wherein creating a machine condition pattern rule comprises:

   determining a matching score for each comparison of the condition signal pattern to each of the plurality of known signal patterns based on the comparison of the condition signal pattern to each of the plurality of known signal patterns;
   determining (510) a signal pattern duration of each of the plurality of known signal patterns by varying the original signal pattern duration of each of the plurality of known signal patterns to achieve optimal correlation with the condition signal pattern;
   determining (512) an optimal known signal pattern based on the matching scores and the signal pattern durations, wherein the known signal pattern that most closely matches the condition signal pattern is selected as the optimal known signal pattern;
   defining (516, 518) the machine condition pattern rule as a multipartite threshold rule with a first threshold based on the determined matching score of the optimal known signal pattern and a second threshold based on the determined signal pattern duration of the optimal known signal pattern;

   storing (522) the created machine condition pattern rule in a rule base of the machine condition monitoring system (100, 600); and
   monitoring a machine condition of the monitored machine (102) by detecting (532, 534) a fault condition in the monitored machine based on a machine condition signal received from the monitored machine using the created machine condition pattern rule.

2. The method of claim 1 wherein monitoring a machine condition of the monitored machine comprises:

   receiving the machine condition signal including a machine condition signal pattern from the sensors measuring the parameters of the monitored machine;
   determining if the machine condition signal pattern satisfies one or more properties of the created machine condition pattern rule.

3. The method of claim 1 wherein creating a machine condition pattern rule further comprises:

   determining if the optimal known signal pattern is a parametric signal pattern or a non-parametric signal pattern; and
   defining (518) the machine condition pattern rule as a multipartite threshold rule with an additional third threshold based on an optimal parameter set of the optimal known signal pattern when the optimal known signal pattern is a parametric signal pattern.

4. The method of claim 1, wherein the determining of the signal pattern duration of each of the plurality of known signal patterns to achieve optimal correlation with the condition signal pattern comprises:
stretching or compressing the original signal pattern duration of each of the plurality of known signal patterns to achieve optimal correlation with the condition signal pattern.

5. The method of claim 1, wherein the determining of the signal pattern duration of each of the plurality of known signal patterns to achieve optimal correlation with the condition signal pattern comprises:
varying the original signal pattern duration of each of the plurality of known signal patterns while keeping a duration of the condition signal pattern intact to achieve optimal correlation with the condition signal pattern.

6. The method of claim 1, wherein when the plurality of known signal patterns are nonparametric signal patterns, the determining of the signal pattern duration of each of the plurality of known signal patterns to achieve optimal correlation with the condition signal pattern comprises:
varying the original signal pattern duration of each of the plurality of known signal patterns using downsampling or interpolation to determine signal values at non-existing data points.

7. A data processing apparatus for machine condition monitoring, comprising:

means (106) for receiving a condition signal pattern from sensors measuring parameters of a monitored machine (102), wherein the condition signal pattern is indicative of a fault condition;
means for comparing the condition signal pattern to a plurality of known signal patterns that are indicative of fault conditions;
means (108) for creating a machine condition pattern rule for the monitored machine based on the comparison of the condition signal pattern to each of the plurality of known signal patterns, wherein the means for creating a machine condition pattern rule comprises:

means for determining a matching score for each comparison of the condition signal pattern to each of the plurality of known signal patterns based on the comparison of the condition signal pattern to each of the plurality of known signal patterns;
means for determining a signal pattern duration of each of the plurality of known signal patterns by varying the original signal pattern duration of each of the plurality of known signal patterns to achieve optimal correlation with the condition signal pattern;
means for determining an optimal known signal pattern based on the matching scores and the signal pattern durations, wherein the known signal pattern that most closely matches the condition signal pattern is selected as the optimal known signal pattern; and
means for defining the machine condition pattern rule as a multipartite threshold rule with a first threshold based on the determined matching score of the optimal known signal pattern and a second threshold based on the determined signal pattern duration of the optimal known signal pattern;

means for storing the created machine condition pattern rule in a rule base; and
means for monitoring a machine condition of the monitored machine by detecting a fault condition in the monitored machine based on a machine condition signal received from the monitored machine using the created machine condition pattern rule.

8. The data processing apparatus of claim 8 wherein the means for monitoring the machine condition of the monitored machine comprises:

means for receiving the machine condition signal including a machine condition signal pattern from the sensors measuring the parameters of the monitored machine;
means for determining if the machine condition signal pattern satisfies one or more properties of the created machine condition pattern rule.

9. The data processing apparatus of claim 7 wherein the means for creating a machine condition pattern rule further comprises:

means for determining if the optimal known signal pattern is a parametric signal pattern or a non-parametric signal pattern; and
means for defining the machine condition pattern rule as a multipartite threshold rule with an additional third threshold based on an optimal parameter set of the optimal known signal pattern when the optimal known signal pattern is a parametric signal pattern.

10. A machine readable medium having stored thereon program instructions which, when executed by a processor, cause the processor to perform the method according to any one of claims 1 to 6.

**Patentansprüche**

1. Verfahren zur Maschinenzustand-Überwachung durch einen Prozessor (602) eines Maschinenzustand-Überwachungssystems (100, 600), das Verfahren umfassend:

   Empfangen (506) eines Zustandssignalmusters von Sensoren, die Parameter einer überwachten Maschine (102) messen, wobei das Zustandssignalmuster indikativ für einen Fehlerzustand ist;
   Vergleichen (508) des Zustandssignalmusters (102) mit einer Vielzahl bekannter Signalmuster, die indikativ für Fehlerzustände sind;
   Erzeugen einer Maschinenzustand-Musterregel für die überwachte Maschine (102) basierend auf dem Vergleich des Zustandssignalmusters mit jedem der Vielzahl von bekannten Signalmustern, wobei ein Erzeugen einer Maschinenzustand-Musterregel Folgendes umfasst:

   Bestimmen eines Übereinstimmungswerts für jeden Vergleich des Zustandssignalmusters mit jedem der Vielzahl bekannter Signalmuster basierend auf dem Vergleichs des Zustandssignalmusters mit jedem der Vielzahl bekannter Signalmuster;
   Bestimmen (510) einer Signalmusterdauer von jedem der Vielzahl bekannter Signalmuster durch Variieren der ursprünglichen Signalmusterdauer von jedem der Vielzahl bekannter Signalmuster, um eine optimale Korrelation mit dem Zustandssignalmuster zu erreichen;
   Bestimmen (512) eines optimalen bekannten Signalmusters basierend auf den Übereinstimmungswerten und den Signalmusterdauern, wobei das bekannte Signalmuster, das am ehesten mit dem Zustandssignalmuster übereinstimmt, als das optimale bekannte Signalmuster ausgewählt wird;
   Definieren (516, 518) der Maschinenzustand-Musterregel als eine mehrteilige Schwellenwertregel mit einem ersten Schwellenwert basierend auf dem ermittelten Übereinstimmungswert des optimalen bekannten Signalmusters, und einem zweiten Schwellenwert basierend auf der ermittelten Signalmusterdauer des optimalen bekannten Signalmusters;
   Speichern (522) der erzeugten Maschinenzustand-Musterregel in einer Regelbasis des Maschinenzustand-Überwachungssystems (100, 600); und
   Überwachen eines Maschinenzustands der überwachten Maschine (102) durch Erfassen (532, 534) eines Fehlerzustands in der überwachten Maschine basierend auf einem Maschinenzustandssignal, das von der überwachten Maschine unter Verwendung der erzeugten Maschinenzustand-Musterregel empfangen wird.

2. Verfahren gemäß Anspruch 1, wobei ein Überwachen eines Maschinenzustands der überwachten Maschine Folgendes umfasst:

   Empfang des Maschinenzustandssignals einschließlich eines Maschinenzustand-Signalmusters von den Sensoren, die die Parameter der überwachten Maschine messen;
   Bestimmen, ob das Maschinenzustand-Signalmuster eine oder mehrere Eigenschaften der erzeugten Maschinenzustand-Musterregel erfüllt.

3. Verfahren gemäß Anspruch 1, wobei ein Erzeugen einer Maschinenzustand-Musterregel ferner Folgendes umfasst:

   Bestimmen, ob das optimale bekannte Signalmuster ein parametrisches Signalmuster oder ein nicht-parametrisches Signalmuster ist; und
   Definieren (518) der Maschinenzustand-Musterregel als mehrteilige Schwellenwertregel mit einem zusätzlichen dritten Schwellenwert basierend auf einem optimalen Parametersatz des optimalen bekannten Signalmusters, wenn das optimale bekannte Signalmuster ein parametrisches Signalmuster ist.

4. Verfahren gemäß Anspruch 1, wobei das Bestimmen der Signalmusterdauer von jedem der Vielzahl bekannter Signalmuster zum Erreichen einer optimalen Korrelation mit dem Zustandssignalmuster Folgendes umfasst:
   Ausdehnen oder Komprimieren der ursprünglichen Signalmusterdauer von jedem der Vielzahl bekannter Signalmuster, um eine optimale Korrelation mit dem Zustandssignalmuster zu erreichen.

5. Verfahren gemäß Anspruch 1, wobei das Bestimmen der Signalmusterdauer von jedem der Vielzahl bekannter Signalmuster zum Erreichen einer optimalen Korrelation mit dem Zustandssignalmuster Folgendes umfasst:
   Variieren der ursprünglichen Signalmusterdauer von jedem der Vielzahl bekannter Signalmuster unter Aufrechterhaltung einer Dauer des Zustandssignalmusters, um eine optimale Korrelation mit dem Zustandssignalmuster zu erreichen.

6. Verfahren gemäß Anspruch 1, wobei, wenn die Vielzahl bekannter Signalmuster nicht-parametrische Signalmuster sind, das Bestimmen der Signalmusterdauer von jedem der Vielzahl bekannter Signalmuster zum Erreichen einer optimalen Korrelation mit dem Zustandssignalmuster Folgendes umfasst: Variieren der ursprünglichen Signalmusterdauer von jedem der Vielzahl bekannter Signalmuster unter Verwendung von Abwärtsabtastung oder Interpolation zum Bestimmen von Signalwerten an nicht vorhandenen Datenpunkten.

7. Datenverarbeitungsvorrichtung zur Maschinenzustandsüberwachung, umfassend:

Einrichtung (106) zum Empfangen eines Zustandssignalmusters von Sensoren, die Parameter einer überwachten Maschine (102) messen, wobei das Zustandssignalmuster indikativ für einen Fehlerzustand ist; Einrichtung zum Vergleichen des Zustandssignalmusters mit einer Vielzahl bekannter Signalmuster, die indikativ für Fehlerzustände sind; Einrichtung zum Erzeugen einer Maschinenzustand-Musterregel für die überwachte Maschine basierend auf dem Vergleich des Zustandssignalmusters mit jedem der Vielzahl bekannter Signalmuster, wobei die Einrichtung zum Erzeugen einer Maschinenzustand-Musterregel Folgendes umfasst:

Einrichtung zum Bestimmen eines Übereinstimmungswerts für jeden Vergleich des Zustandssignalmusters mit jedem der Vielzahl bekannter Signalmuster basierend auf dem Vergleichs des Zustandssignalmusters mit jedem der Vielzahl bekannter Signalmuster; Einrichtung zum Bestimmen einer Signalmusterdauer von jedem der Vielzahl bekannter Signalmuster durch Variieren der ursprünglichen Signalmusterdauer von jedem der Vielzahl bekannter Signalmuster, um eine optimale Korrelation mit dem Zustandssignalmuster zu erreichen; Einrichtung zum Bestimmen eines optimalen bekannten Signalmusters basierend auf den Übereinstimmungswerten und den Signalmusterdauern, wobei das bekannte Signalmuster, das am ehesten mit dem Zustandssignalmuster übereinstimmt, als das optimale bekannte Signalmuster ausgewählt wird; und Einrichtung zum Definieren der Maschinenzustand-Musterregel als eine mehrteilige Schwellenwertregel mit einem ersten Schwellenwert basierend auf dem ermittelten Übereinstimmungswert des optimalen bekannten Signalmusters, und einem zweiten Schwellenwert basierend auf der ermittelten Signalmusterdauer des optimalen bekannten Signalmusters; Einrichtung zum Speichern der erzeugten Maschinenzustand-Musterregel in einer Regelbasis; und Einrichtung zum Überwachen eines Maschinenzustands der überwachten Maschine durch Erfassen eines Fehlerzustands in der überwachten Maschine basierend auf einem Maschinenzustandssignal, das von der überwachten Maschine unter Verwendung der erzeugten Maschinenzustand-Musterregel empfangen wird.

8. Datenverarbeitungsvorrichtung gemäß Anspruch 8, wobei die Einrichtung zum Überwachen des Maschinenzustands der überwachten Maschine Folgendes umfasst:

Einrichtung zum Empfangen des Maschinenzustandssignals einschließlich eines Maschinenzustand-Signalmusters von den Sensoren, die die Parameter der überwachten Maschine messen; Einrichtung zum Bestimmen, ob das Maschinenzustand-Signalmuster eine oder mehrere Eigenschaften der erzeugten Maschinenzustand-Musterregel erfüllt.

9. Datenverarbeitungsvorrichtung gemäß Anspruch 7, wobei die Einrichtung zum Erzeugen einer Maschinenzustand-Musterregel ferner Folgendes umfasst:

Einrichtung zum Bestimmen, ob das optimale bekannte Signalmuster ein parametrisches Signalmuster oder ein nicht-parametrisches Signalmuster ist; und Einrichtung zum Definieren der Maschinenzustand-Musterregel als mehrteilige Schwellenwertregel mit einem zusätzlichen dritten Schwellenwert basierend auf einem optimalen Parametersatz des optimalen bekannten Signalmusters, wenn das optimale bekannte Signalmuster ein parametrisches Signalmuster ist.

10. Maschinenlesbarer Datenträger mit darauf gespeicherten Programmanweisungen, die, wenn sie von einem Prozessor ausgeführt werden, den Prozessor veranlassen, das Verfahren nach einem der Ansprüche 1 bis 6 auszuführen.

**Revendications**

1. Un procédé de surveillance d'état de machine par un processeur (602) d'un système de surveillance d'état de machine (100, 600), le procédé comprenant :

la réception (506) d'un motif de signal d'état à partir de capteurs mesurant les paramètres d'une machine surveillée (102), dans lequel le motif de signal d'état est indicatif d'un état de défaillance ;

la comparaison (508) du motif de signal d'état (102) à une pluralité de motifs de signal connus qui sont indicatifs des états de défaillance ;

la création d'une règle de motif d'état de machine pour la machine surveillée (102) sur la base de la comparaison du motif de signal d'état à chacun de la pluralité de motifs de signal connus, dans lequel la création d'une règle de motif d'état de machine comprend :

la détermination d'un score de correspondance pour chaque comparaison du motif de signal d'état à chacun de la pluralité de motifs de signal connus sur la base de la comparaison du motif de signal d'état à chacun de la pluralité de motifs de signal connus ;

la détermination (510) d'une durée de motif de signal de chacun de la pluralité de motifs de signal connus en variant la durée de motif de signal d'origine de chacun de la pluralité de motifs de signal connus pour obtenir une corrélation optimale avec le motif de signal d'état ;

la détermination (512) d'un motif de signal connu optimal sur la base des scores de correspondance et des durées de motif de signal, dans lequel le motif de signal connu qui correspond le plus étroitement au motif de signal d'état est sélectionné comme le motif de signal connu optimal ;

la définition (516, 518) de la règle de motif d'état de machine comme une règle de seuil multipartite avec un premier seuil sur la base du score de correspondance déterminé du motif de signal connu optimal et un deuxième seuil sur la base de la durée de motif de signal déterminée du motif de signal connu optimal ;

le stockage (522) de la règle de motif d'état de machine créée dans une base de règle du système de surveillance d'état de machine (100, 600) ; et

la surveillance d'un état de machine de la machine surveillée (102) en détectant (532, 534) un état de défaillance dans la machine surveillée sur la base d'un signal d'état de machine reçu de la machine surveillée en utilisant la règle de motif d'état de machine créée.

2. Le procédé selon la revendication 1 dans lequel la surveillance d'un état de machine de la machine surveillée comprend :

la réception du signal d'état de machine, y compris un motif de signal d'état de machine à partir des capteurs mesurant les paramètres de la machine surveillée ;

la détermination du fait que le motif de signal d'état de machine satisfait à une ou plusieurs propriétés de la règle de motif d'état de machine créée.

3. Le procédé selon la revendication 1 dans lequel la création d'une règle de motif d'état de machine comprend en outre :

la détermination du fait que le motif de signal connu optimal est un motif de signal paramétrique ou un motif de signal non paramétrique ; et la définition (518) de la règle de motif d'état de machine comme une règle de seuil multipartite avec un troisième seuil supplémentaire sur la base d'un ensemble de paramètres optimal du motif de signal connu optimal lorsque le motif de signal connu optimal est un motif de signal paramétrique.

4. Le procédé selon la revendication 1, dans lequel la détermination de la durée de motif de signal de chacun de la pluralité de motifs de signal connus pour obtenir une corrélation optimale avec le motif de signal d'état comprend :
l'étirement ou la compression de la durée de motif de signal d'origine de chacun de la pluralité de motifs de signal connus pour obtenir une corrélation optimale avec le motif de signal d'état.

5. Le procédé selon la revendication 1, dans lequel la détermination de la durée de motif de signal de chacun de la pluralité de motifs de signal connus pour obtenir une corrélation optimale avec le motif de signal d'état comprend :
la variation de la durée de motif de signal d'origine de chacun de la pluralité de motifs de signal connus tout en conservant une durée de motif de signal d'état intacte pour obtenir une corrélation optimale avec le motif de signal d'état.

6. Le procédé selon la revendication 1, dans lequel lorsque la pluralité de motifs de signal connus sont des motifs de signal non paramétriques, la détermination de la durée de motif de signal de chacun de la pluralité de motifs de signal connus pour obtenir une corrélation optimale avec le motif de signal d'état comprend :
la variation de la durée de motif de signal d'origine de chacun de la pluralité de motifs de signal connus en utilisant le sous-échantillonnage ou l'interpolation pour déterminer les valeurs de signal à des points de données non existants.

7. Un appareil de traitement de données pour la surveillance d'état de machine, comprenant :

un moyen (106) pour recevoir un motif de signal d'état à partir de capteurs mesurant les paramètres d'une machine surveillée (102), dans lequel le motif de signal d'état est indicatif d'un état de défaillance ;
un moyen pour comparer le motif de signal d'état à une pluralité de motifs de signal connus qui sont indicatifs des états de défaillance ;
un moyen (108) pour créer une règle de motif d'état de machine pour la machine surveillée sur la base de la comparaison du motif de signal d'état à chacun de la pluralité de motifs de signal connus, dans lequel le moyen pour créer une règle de motif d'état de machine comprend :

un moyen pour déterminer un score de correspondance pour chaque comparaison du motif de signal d'état à chacun de la pluralité de motifs de signal connus sur la base de la comparaison du motif de signal d'état à chacun de la pluralité de motifs de signal connus ;
un moyen pour déterminer une durée de motif de signal de chacun de la pluralité de motifs de signal connus en variant la durée de motif de signal d'origine de chacun de la pluralité de motifs de signal connus pour obtenir une corrélation optimale avec le motif de signal d'état ;
un moyen pour déterminer un motif de signal connu optimal sur la base des scores de correspondance et des durées de motif de signal, dans lequel le motif de signal connu qui correspond le plus étroitement au motif de signal d'état est sélectionné comme le motif de signal connu optimal ; et
un moyen pour définir la règle de motif d'état de machine comme une règle de seuil multipartite avec un premier seuil sur la base du score de correspondance déterminé du motif de signal connu optimal et un deuxième seuil sur la base de la durée de motif de signal déterminée du motif de signal connu optimal ;
un moyen pour stocker la règle de motif d'état de machine créée dans une base de règle ; et
un moyen pour surveiller l'état de machine de la machine surveillée en détectant un état de défaillance dans la machine surveillée sur la base d'un signal d'état de machine reçu de la machine surveillée en utilisant la règle de motif d'état de machine créée.

8. L'appareil de traitement de données selon la revendication 8 dans lequel le moyen pour surveiller l'état de machine de la machine surveillée comprend :

un moyen pour recevoir le signal d'état de machine, y compris un motif de signal d'état de machine à partir des capteurs mesurant les paramètres de la machine surveillée ;
un moyen pour déterminer si le motif de signal d'état de machine satisfait à une ou plusieurs propriétés de la règle de motif d'état de machine créée.

9. L'appareil de traitement de données selon la revendication 7 dans lequel le moyen pour créer une règle de motif d'état de machine comprend en outre :

un moyen pour déterminer si le motif de signal connu optimal est un motif de signal paramétrique ou un motif de signal non paramétrique ; et
un moyen pour définir la règle de motif d'état de machine comme une règle de seuil multipartite avec un troisième seuil supplémentaire sur la base d'un ensemble de paramètres optimal du motif de signal connu optimal lorsque le motif de signal connu optimal est un motif de signal paramétrique.

10. Un support lisible par machine ayant des instructions de programme stockées sur celui-ci qui, lorsqu'elles sont exécutées par un processeur, amènent le processeur à effectuer le procédé selon l'une quelconque des revendications 1 à 6.

FIG. 1

FIG. 2

FIG. 3

FIG. 4

500

FIG. 5

```
                          ( START )  ←502

              STORE KNOWN SIGNAL PATTERNS  ←504

506→         RECEIVE CONDITION SIGNAL
                     PATTERN

508→         COMPARE CONDITION SIGNAL
              PATTERN TO KNOWN SIGNAL
                     PATTERN

510→         DETERMINE SIGNAL PATTERN
                     DURATION

512→         SELECT OPTIMAL KNOWN PATTERN

514→            PARAMETRIC OR
               NONPARAMETRIC?                    NP

516→                              P

   DETERMINE PARAMETER SET

   DETERMINE MACHINE              DETERMINE MACHINE
   CONDITION PATTERN RULE         CONDITION PATTERN RULE  ←518

520→            STORE PATTERN RULES  ←522

524→         RECEIVE MACHINE CONDITION
                 SIGNAL PATTERN

   COMPARE MACHINE CONDITION SIGNAL PATTERN TO      ←526
   KNOWN SIGNAL PATTERN AND DETERMINE SIGNAL
              PATTERN DURATION

528→            PARAMETRIC OR                    NP
               NONPARAMETRIC?

530→                              P               532

   DETERMINE PARAMETER SET              DETECT FAULT CONDITION

   DETECT FAULT CONDITION  ←534        ( END )  ←536
```

600

NETWORK
INTERFACE

608

I/O

610

PROCESSOR

602

STORAGE

604

MEMORY

606

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002103626 A
- US 6076405 A
- US 6484109 B